(19) **Europäisches Patentamt**
**European Patent Office**
**Office européen des brevets**

(11) **EP 2 032 332 B1**

(12) **EUROPEAN PATENT SPECIFICATION**

(45) Date of publication and mention
of the grant of the patent:
**26.01.2011 Bulletin 2011/04**

(51) Int Cl.:
***B29C 49/00*** (2006.01)

(21) Application number: **07730265.1**

(86) International application number:
**PCT/EP2007/056133**

(22) Date of filing: **20.06.2007**

(87) International publication number:
**WO 2007/147848 (27.12.2007 Gazette 2007/52)**

(54) **STRETCHING/BLOWING CONDITIONS IN ONE-STAGE INJECTION-STRETCH-BLOW-MOULDING**

STRECK-/BLASBEDINGUNGEN BEIM EINSTUFIGEN SPRITZSTRECKBLASFORMEN

CONDITIONS D'ÉTIRAGE-SOUFFLAGE DANS UN MOULAGE PAR INJECTION AVEC ÉTIRAGE-SOUFFLAGE EN UNE ÉTAPE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **21.06.2006 EP 06115771**

(43) Date of publication of application:
**11.03.2009 Bulletin 2009/11**

(73) Proprietor: **TOTAL PETROCHEMICALS RESEARCH FELUY**
**7181 Seneffe (Feluy) (BE)**

(72) Inventors:
• **DURANEL, Laurent**
**B-1400 Nivelles (BE)**
• **HUMBEECK, Emmanuel**
**B-7181 Feluy (BE)**
• **RADERMACHER, Fabienne**
**B-6230 Obaix (BE)**

(56) References cited:
**EP-A- 0 012 481     EP-A1- 0 764 514**
**EP-A2- 0 251 340     EP-A2- 0 309 138**
**WO-A-2005/118407   WO-A2-95/11791**
**DE-A1- 19 805 329   JP-A- 60 149 427**

**Description**

The present invention relates to the optimal stretching/blowing conditions to be used in the preparation of polypropylene articles by one-stage injection-stretch-blow-moulding (ISBM).

EP-A-151741 to Mitsui discloses single-stage manufacturing of articles by ISBM. These articles are prepared from propylene-ethylene random copolymers having a melt flow index of from 4 to 50 dg/min and containing a nucleating agent. The injection moulding temperature is of from 200 to 260°C and all examples have been carried out with an injection moulding temperature of 220 °C.

WO95/11791 to Bekum is directed to a two-stage process for preparing articles by ISBM. The preferred resin is an ethylene-propylene copolymer containing more than 50 wt% of propylene and having a melt index of from 10 to 20 dg/min. The injection cavity fill rate is of from 3 to 5 grams per second and the injection temperature is of about 210°C.

WO05/074428 to Milliken discloses a two-stage process for preparing articles by ISBM. The resin is a polypropylene composition having a melt flow index of from 6 to 50 dg/min, preferably from 13 to 35 dg/min prepared by any method known in the art. The mould fill rate is larger than 5 grams per second and the preform articles have sidewalls having a maximum thickness of less than 3.5 mm. The injection temperatures cited in the examples are of 230 and 240 °C.

WO99/41293 to BASF discloses the use of metallocene-produced homo- or copolymers of propylene in ISBM. The range of melt indexes is broadly defined from 0.1 to 1000 dg/min and the injection temperature is of from 200 to 280 °C. The polydispersity index of metallocene-prepared polypropylene is very narrow.

EP-A-0 309 138 discloses a random copolymer polypropylene container comprising a biaxially oriented propylene-ethylene random copolymer resin having an ethylene content between 0.5 % and 8 % by weight, based upon the weight of the resin, and a melt flow rate of greater than 50 g/10 min. Said random copolymer polypropylene container is produced by stretch-blow moulding an injection-moulded preform to biaxially orient said resin into the shape of the container.

EP-A-0 764 514 discloses a stretch-blow moulding process for the preparation of polypropylene containers wherein use is made, as the polypropylene material, of a crystalline propylene copolymer containing from 4 to 12 % by weight of one or more $C_4$-$C_8$ α-olefins. Preferably the polypropylene material is a propylene/1-butene crystalline copolymer.

EP-A-0 251 340 discloses a process for producing an injection stretch-blow moulded container, wherein an injection-moulded parison with a bottom is preblown in a preblowing and stretch temperature adjusting mold, which has been adjusted to a temperature in the range of (Tc - 30°C) to (Tc + 20°C), wherein Tc is the crystallisation temperature of the polypropylene-base resin, and the resulting preform is then stretch-blow moulded. The polypropylene-base resin used in this process is preferably a random copolymer of propylene and an alpha-olefin.

None of these resins produce articles having an ideal balance of properties.

It is an aim of the present invention to produce good quality polypropylene articles by one-stage injection-stretch-blow-moulding.

It is another aim of the present invention to provide optimal stretching/blowing conditions for producing polypropylene articles by injection-stretch-blow moulding having excellent optical properties after bi-orientation.

It is also an aim of the present invention to produce articles having good thickness distribution.

It is a further aim of the present invention to produce articles having good stacking properties.

It is yet another aim of the present invention to produce articles having excellent drop test, especially at low temperature.

Any one of these aims is fulfilled, at least partially, by the present invention.

Accordingly, the present invention discloses a method for preparing containers by one-stage injection-stretch-blow-moulding with a resin comprising:

-    a random copolymer of propylene and ethylene (RCP) having a melt index of from 1.5 to 35 dg/min and an ethylene content of less than 6 wt% with respect to the weight of the RCP; and
-    optionally a nucleating and/or a clarifying agent;

wherein the preform injection temperature Tinj is of from 200 to 270 °C and wherein the stretching and blowing temperature Tsb is limited to a very narrow range ΔT of at most 15°C, said stretching/blowing temperature Tsb being expressed in terms of preform injection temperature Tinj as Tsb = 105 + 0.27 x (Tinj - 200).

The melt flow index M12 is measured following the method of standard test ISO 1133 under a load of 2.16 kg and at a temperature of 230 °C.

Preferably the preform injection temperature is of at least 210°C and at most 270°C.

The stretching/blowing temperature is limited to a very narrow range ΔT of less than 15°C, said range being a function of preform injection temperature Tinj. In the range of preform injection temperature of from 200 to 270°C used in the present invention, the relationship between the stretching/blowing temperature Tsb and the preform injection temperature Tinj can be expressed by

$$\text{Tsb} = 105 + 0.27 \times (\text{Tinj} - 200)$$

For example, for resins having a melt flow rate of about 10 dg/min and for a preform injection temperature of 210°C, the preferred stretching/blowing temperature ranges between 100 and 115 °C, and for a preform injection temperature of 260 °C, the preferred stretching/blowing temperature ranges between 117 and 125 °C.

The best mechanical properties are obtained in the stretching/blowing temperature range between 100 and 115°C, for resins having a melt flow rate in the middle of the range, of about 10 dg/min.

If the melt flow rate decreases, the preform injection temperature increases accordingly. The stretching/blowing temperature also increases, but the range of allowed temperatures remains smaller than 15°C.

Preferably, the polypropylene resin used in the present invention is prepared with a Ziegler-Natta (ZN) catalyst system. ZN catalyst systems inherently produce polymers having a broad polydispersity index. The polydispersity index is defined as the ratio Mw/Mn of the weight average molecular weight Mw over the number average molecular weight Mn. For sake of clarity, it is repeated that metallocene and single-site catalysts are not ZN catalysts.

The resin is a random copolymer of propylene. The preferred comonomer is ethylene and the amount of ethylene present in the resin is preferably of at most 4.5 wt%. The preferred minimum is of 1 wt%.

The resin may additionally contain up to 5000 ppm of the nucleating or clarifying agents usually used in the field. Preferably, if present, the nucleating agent is used in an amount of from 200 to 2500 ppm. The nucleating or clarifying agents that can be used in the present invention can be selected from sorbitols, sodium salts, lithium benzoate, sodium benzoate, talc, aluminium salts or combinations thereof.

Other additives typically employed in the field such as for example antioxidants or antistatic may be added.

The melt temperature and the nature of the raw material are the parameters that influence most the properties of the articles prepared by one-stage ISBM.

The injection temperature is preferably increased for low melt index resins in order to avoid excessive stress. Increasing the injection temperature allows to increase the injection rate without increasing the stress. At a given temperature, the shear rate can be expressed as

$$\text{Shear rate} = (32 \times \text{injection speed}) / (3.14159 \times \text{gate diameter}^3)$$

The relation between the melt temperature and the shear rate is not known exactly, but it is generally accepted that the higher the temperature, the lower the shear rate.

At a specified injection temperature, the mould filling rate over gate diameter ratio is of at most 10 cc/s/mm, preferably of at most 6 cc/s/mm. Preferably, it is of at least 3 cc/s/mm. The gate diameters that are typically used in the field are of from 2 to 4 mm, preferably this invention uses gate diameters of from 2.8 to 4 mm.

The injection-stretch-blow-moulding can be carried out either in a two-stage process carried out on two separate machines (cold cycle), or in a single-stage process carried out on a single machine (hot cycle). In the present invention, the one-stage process is used: all steps are carried out in the same machine.

Injection stretch blow moulding comprises the steps of:

- providing a pre-form by injection moulding on a multi-cavity mould;
- optionally slightly re-heating the pre-form in a reflective radiant heat oven or in front of an adequate source of heat, like an air knife, following a pre-determined temperature profile for the pre-form;
- optionally, passing the heated pre-form through an equilibrium zone to allow the heat to disperse evenly through the pre-form wall;
- optionally, submitting the preform to a pre-blow step;
- stretching the pre-form axially by a centre rod;
- orienting the stretched pre-form radially by high pressure air.

In this process, the stretching step is critical: it requires homogeneous heating of the pre-form and thus optimisation of the pre-form.

The pre-blow pressure is generally of from 4 to10 bars, preferably of from 6 to 8 bars. The stretching is then typically carried out under a blowing pressure of from 5 to 40 bars, preferably of from 8 to 30 bars, according to preform wall thickness. The stretch rod speed is of from 1000 to 2000 mm/s, preferably of from 1400 to 1800 mm/s and most preferably of about 1600 mm/s. The stretch rod diameter depends upon the size of the preform. The best results for material distribution in the finished article are obtained when the rod diameter is about 2/3 of that of the preform. For example, for a preform having a diameter of 25 mm, the preferred rod diameter is of about 16 mm.

The articles prepared with the preforms obtained by the method of the present invention have remarkable optical properties: they have an excellent transparency throughout their whole body or at least throughout most of their body. In addition they have good wall thickness distribution, excellent drop test and very good top load and stacking properties. They also have a number of desirable properties such as for example low water vapour permeability, good squeezability, and excellent heat resistance allowing for example hot filling, microwave heating or sterilisation.

The properties of the ISBM containers are illustrated by the following examples that are not intended to limit the scope of the invention.

## Examples.

A random copolymer of propylene prepared with a Ziegler-Natta catalyst system has been tested. It had the following properties:

C2 = 2.8 wt%
MI2 = 10 dg/min
Tm = 146°C
Tc start = 132.3 °C
Tc peak = 117.3 °C

Wherein Tm and Tc represent respectively the melting and crystallisation temperatures.

A first resin was used without nucleating or clarifying agents (S03), a second resin was used with 2000 ppm of dibenzylidene sorbitol (DBS) as clarifying agent (S01) and a third resin was used with 250 ppm of Na11 as nucleating agent (S02).

800 mL coffee jars were prepared: their weight was of 33 g. The processing parameters were as follows.

Injection parameters.

Gate size = 4 mm
Injection time = 2.15 s
Injection speed = 15.4 g/s
Mould temperature = 15 °C

Stretching/blowing parameters.

Mould temperature = 15 °C
Preblow delay = 0.2 s ( 0 time represents the moment when the rod enters the preform)
Preblow pressure = 8 bars
Preblow airflow = maximum opening
Preblow duration = 0.4 s
Blow start = 0.6 s (preblow delay + preblow duration)
Blow pressure = 38 bars
Blow duration = 3.4 s
Decompression time = 0.6 s (after blow duration, before mould opening, for security reasons).

## List of figures.

Figure 1 represents the haze expressed in % as a function of stretching / blowing temperature expressed in °C for the three resins S01 to S03.

Figure 2 represents the top load expressed in Newtons 72 hours after the blowing step, as a function of stretching / blowing temperature expressed in °C for the three resins S01 to S03.

Figure 3 represents the drop test results expressed in metres, as a function of stretching / blowing temperature expressed in °C, for the three resins S01 to S03 and

at a drop temperature of 5°C.

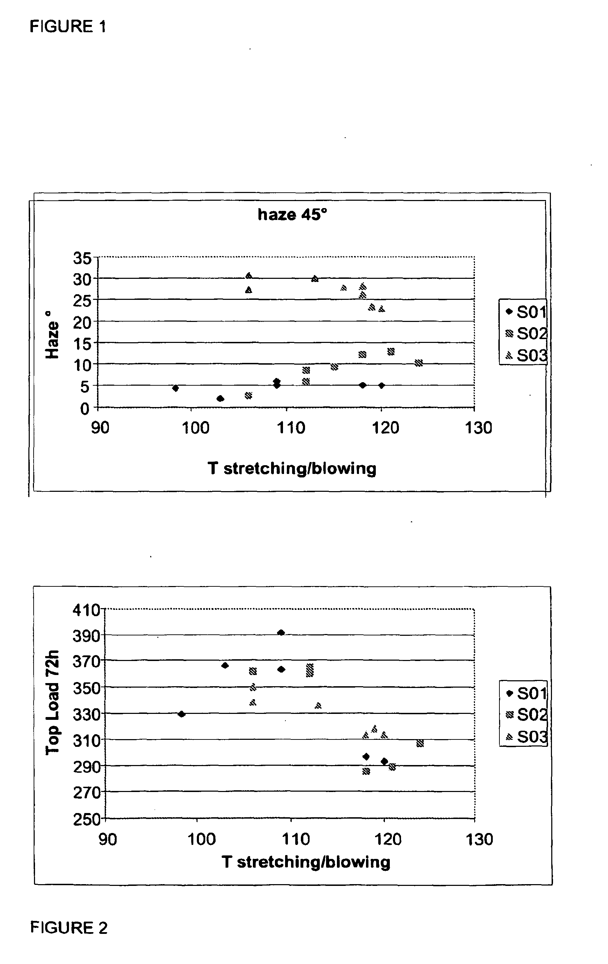

Haze was measured at mid-height of the jars, in the middle of the labelling zone at a height of about 56 mm, and on four points around the diameter, respectively at 45, 135, 225 and 315 °, following the method of ISO 14782. The haze values reported in figure 1 and are the average of these 4 measures. As expected, resins containing nucleating agent have a much lower haze than non-additivated resins. It can also be seen that increasing stretching / blowing temperature has a negative influence on haze.

Top load tests were carried out on an AC-002 from Top Wave International Inc. under the following conditions:

Program 'Heatset', Mode B
Distance = 10 mm
Speed = 5 mm/s.

Top load measurements were carried out on empty jars 72 hours after blowing.
The results are presented in figure 2.

After 72 hours, jars prepared with resin S01, additivated with DBS, had slightly better top load results than those prepared with resins S03, not additivated and with S02, additivated with Na11. The differences were especially marked at low stretching / blowing temperature. The jars prepared with non-additivated resin S03 were the least resistant in top load.

The influence of stretching / blowing temperature on top load was very marked for additivated resins S01 and S02: the higher the stretching / blowing temperature, the lower the top load. Differences up to 20% are observed.

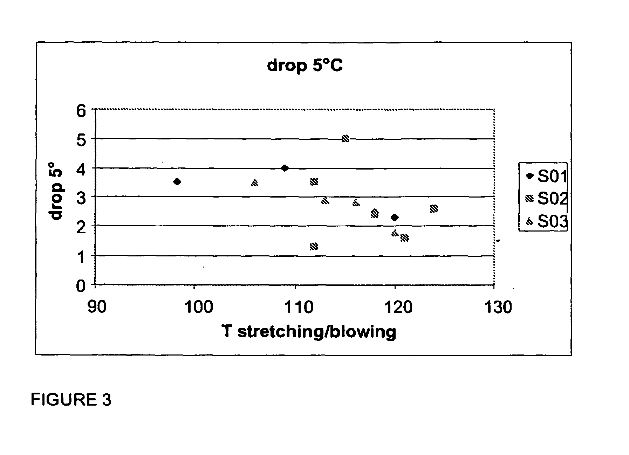

The drop impact resistance was measured on jars filled with water. Prior to the test, the jars were conditioned during 24 hours at the test temperature. They were dropped vertically on a metal plate with a slope of 15°. The results are displayed in figure 3.

Drop test results were influenced by additivation, especially at low stretching / blowing temperature: the drop test resistance of nucleated resins was higher than that of non-nucleated ones.

A strong influence of the stretching / blowing temperature on the resistance in the drop test was observed, for all three resins.

**Claims**

1.   A method for preparing containers by one-stage injection-stretch-blow-moulding with a resin comprising:

- a random copolymer of propylene and ethylene (RCP) having a melt index of from 1.5 to 35 dg/min and an ethylene content of less than 6 wt% with respect to the weight of the RCP; and
- optionally a nucleating and/or a clarifying agent

wherein the preform injection temperature Tinj is of from 200 to 270 °C and
wherein the stretching and blowing temperature Tsb is limited to a very narrow range $\Delta T$ of at most 15°C, said stretching/blowing temperature Tsb being expressed in terms of preform injection temperature Tinj as Tsb = 105 + 0.27 x (Tinj - 200).

2.   The method of claim 1 wherein the ethylene content is of at most 4.5 wt%.

3.   The method of claim 1 or claim 2 wherein the melt index is of at most 15 dg/min.

4.   The method of claim 1 or claim 3 wherein the preform injection temperature is of about 210°C and the stretching/ blowing temperature is of from 100 to 115°C.

5.   The method of one-stage injection-stretch-blow-moulding of any one of claims 1 to 4 that comprises the steps of:

- providing a pre-form by injection moulding on a multi-cavity mould;
- optionally slightly re-heating the pre-form in a reflective radiant heat oven or in front of an adequate source of heat following a pre-determined temperature profile adapted to the pre-form;
- optionally, passing the heated pre-form through an equilibration zone to allow the heat to disperse evenly through the pre-form wall;
- optionally, submitting the preform to a pre-blow step;
- stretching the pre-form axially by a centre rod;
- orienting the stretched pre-form radially by high pressure air.

**Patentansprüche**

1. Verfahren zum Herstellen von Behältern durch Ein-Stufen-Spritzstreckblasformen mit einem Harz, umfassend:

   - ein beliebiges Copolymer von Propylen and Ethylen (RCP) mit einem Schmelzindex von 1,5 bis 35 dg/min und einem Ethylengehalt von weniger als 6 Gew.-% in Bezug auf das Gewicht des RCP; und
   - gegebenenfalls ein Keimbildungsmittel und/oder ein Klärungsmittel;

   wobei die Vorförmling-Einspritztemperatur Tinj 200 bis 270°C beträgt, und
   wobei die Streck- und Blastemperatur Tsb auf einen sehr engen Bereich ΔT von höchstens 15°C begrenzt ist, wobei die Streck-/Blastemperatur Tsb in Bezug auf die Vorförmling-Einspritztemperatur Tinj als Tsb = 105 + 0,27 x (Tinj - 200) ausgedrückt ist.

2. Verfahren nach Anspruch 1, wobei der Ethylengehalt höchstens 4,5 Gew.-% beträgt.

3. Verfahren nach Anspruch 1 oder 2, wobei der Schmelzindex höchstens 15 dg/min beträgt.

4. Verfahren nach Anspruch 1 oder 3, wobei die Vorförmling-Einspritztemperatur ungefähr 210°C beträgt und die Streck-/Blastemperatur 100 bis 115°C beträgt.

5. Verfahren zum Ein-Stufen-Spritzstreckblasformen nach einem der Ansprüche 1 bis 4, umfassend die folgenden Schritte:

   - Bereitstellen eines Vorförmlings durch Spritzgießen auf einer Mehrfachkavitäten-Form;
   - gegebenenfalls geringfügiges erneutes Erhitzen der Vorförmlings in einem reflektiven Strahlungswärmeofen oder vor einer passenden Wärmequelle gemäß einem vordefinierten Temperaturprofil, das auf den Vorförmling abgestimmt ist;
   - gegebenenfalls Leiten des erhitzten Vorförmlings durch eine Äquilibrierungszone, um ein gleichmäßiges Zerstreuen der Wärme durch den Vorförmling zu ermöglichen;
   - gegebenenfalls Aussetzen des Vorförmlings gegenüber einem Vorblasschritt;
   - axiales Strecken des Vorförmlings durch eine Mittelstange;
   - radiales Ausrichten des gestreckten Vorförmlings durch hohen Luftdruck.

**Revendications**

1. Procédé de préparation de contenants par moulage par injection-étirage-soufflage à une étape avec une résine comprenant :

   - un copolymère statistique de propylène et d'éthylène (RCP) ayant un indice de fluage de 1,5 à 35 dg/min et une teneur en éthylène inférieure à 6 % en poids par rapport au poids du RCP ; et
   - facultativement un agent de nucléation et/ou de clarification ;

   dans lequel la température d'injection de préforme Tinj est de 200 à 270°C et
   dans lequel la température d'étirage et de soufflage Tsb est limitée à une plage très étroite ΔT d'au plus 15°C, ladite température d'étirage/soufflage Tsb étant exprimée en termes de température d'injection de préforme Tinj comme Tsb = 105 + 0,27 x (Tinj - 200).

2. Procédé selon la revendication 1, dans lequel la teneur en éthylène est d'au plus 4,5 % en poids.

3. Procédé selon la revendication 1 ou la revendication 2, dans lequel l'indice de fluage est d'au plus 15 dg/min.

4. Procédé selon la revendication 1 ou la revendication 3, dans lequel la température d'injection de préforme est d'environ 210°C et la température d'étirage/soufflage est de 100 à 115°C.

5. Procédé de moulage par injection-étirage-soufflage à une étape selon l'une quelconque des revendications 1 à 4, qui comprend les étapes consistant à :

- fournir une préforme par moulage par injection sur un moule multi-cavité ;
- facultativement réchauffer légèrement la préforme dans un four à chaleur rayonnante réfléchissante ou en face d'une source adéquate de chaleur suivant un profil de température prédéterminé adapté à la préforme ;
- facultativement, faire passer la préforme chauffée dans une zone d'équilibrage pour permettre à la chaleur de se disperser uniformément à travers la paroi de préforme ;
- facultativement, soumettre la préforme à une étape de présoufflage ;
- étirer la préforme axialement à l'aide d'une tige centrale ;
- orienter la préforme étirée radialement par de l'air haute pression.

FIGURE 1

haze 45°

FIGURE 2

8

FIGURE 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 151741 A, Mitsui
- WO 9511791 A, Bekum
- WO 05074428 A, Milliken
- WO 9941293 A
- EP 0309138 A
- EP 0764514 A
- EP 0251340 A